(19) Europäisches Patentamt
European Patent Office
Office européen des brevets

(11) Veröffentlichungsnummer: **0 064 692**
**B1**

(12) **EUROPÄISCHE PATENTSCHRIFT**

(45) Veröffentlichungstag der Patentschrift: **20.11.86**

(51) Int. Cl.⁴: **C 08 L 69/00,** C 08 L 51/00

(21) Anmeldenummer: **82103699.3**

(22) Anmeldetag: **30.04.82**

(54) **Thermoplastische Formmassen aus aromatischem Polycarbonat und Pfropfpolymerisat.**

(30) Priorität: **13.05.81 DE 3118861**

(43) Veröffentlichungstag der Anmeldung: **17.11.82 Patentblatt 82/46**

(45) Bekanntmachung des Hinweises auf die Patenterteilung: **20.11.86 Patentblatt 86/47**

(84) Benannte Vertragsstaaten: **DE FR GB IT**

(56) Entgegenhaltungen:
**DE - A - 2 259 564**
**DE - A - 2 329 585**
**DE - A - 2 329 646**
**DE - A - 2 717 165**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Nouvertné, Werner, Dr., Scheiblerstrasse 95, D-4150 Krefeld (DE)**
Erfinder: **Lindner, Christian, Dr., Riehler Strasse 200, D-5000 Köln 60 (DE)**

**EP 0 064 692 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen, die o,o,o',o'-Tetramethylbisphenol-Polycarbonat und ein Pfropfpolymerisat enthalten.

Thermoplastische Formmassen aus 10–95 Gew.-% aromatischen Polycarbonaten, deren Bisphenoleinheiten zu mindestens 50 Mol-% aus o,o,o',o'-Tetramethylbisphenoleinheiten bestehen, und 5–90 Gew.-% eines gegebenenfalls modifizierten Kautschuks sind bekannt (DE-A-2 329 585 ≙ US-A-4 172 103). Sie weisen hohe Hydrolysebeständigkeit, Wärmeformbeständigkeit, Schlagzähigkeit, Kerbschlagzähigkeit, Kriechstromfestigkeit und eine geringe Spannungsrissempfindlichkeit auf. Allerdings wird die Schlagzähigkeit bei mehraxialer Belastung, die z.B. für schlagbeanspruchte Gehäuseteile sehr wichtig ist, nicht immer allen Anforderungen gerecht.

Gegenstand der Erfindung sind thermoplastische Formmassen aus

A. 100 Gewichtsteilen aromatischem Polycarbonat und

B. 1 bis 30 Gewichtsteilen Pfropfpolymerisat mit einer Glasübergangstemperatur von unter −20 °C,

dadurch gekennzeichnet, dass das aromatische Polycarbonat A mindestens teilweise aus o,o,o',o'-Tetramethylbisphenol-Polycarbonat besteht und das Pfropfpolymerisat B ein Acrylatkautschuk aus

a) 25–98, vorzugsweise 85–97 Gew.-%, bezogen auf (B), Acrylatkautschuk mit einer Glasübergangstemperatur unter −20 °C als Pfropfgrundlage und

b) 2 bis 75, vorzugsweise 3 bis 15 Gew.-%, bezogen auf (B), mindestens eines polymerisierbaren ethylenisch ungesättigten Monomeren, dessen bzw. deren in Abwesenheit von (a) entstandenen Homo- bzw. Copolymerisate eine Glasübergangstemperatur über 25 °C hätten, als Pfropfmonomere, ist und zur Herstellung des Pfropfpolymerisats B

das Monomere (b) auf den vollständig gebrochenen und in Wasser aufgeschlämmten Latex von (a) in Abwesenheit von Suspendiermittel aufgepfropft worden ist.

Unter aromatischen Polycarbonaten A im Sinne dieser Erfindung werden Homopolycarbonate, Copolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole

sowie deren kernalkylierte und kernhalogenierte Derivate. Diese und weitere geeignete Diphenole sind z.B. in US-A-3 028 365, 3 275 601, 3 148 172, 3 062 781, 2 991 273, 3 271 367, 2 999 835, 2 970 131 und 2 999 846, in DE-A-1 570 703, 2 063 050, 2 063 052, 2 211 956 und 2 211 957, in FR-A-1 561 518 und in der Monographie von H. Schnell, «Chemistry and Physics of Polycarbonates», Interscience Publishers, New York, 1964, beschrieben.

Bevorzugte Diphenole sind z.B.
4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.
2,2-Bis-(4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Bevorzugte o,o,o',o'-Tetramethylbisphenol-Polycarbonate sind z.B.
Bis-(3,5-dimethyl-4-hydroxyphenyle),
Bis-(3,5-dimethyl-4-hydroxyphenyl)-alkane,
Bis-(3,5-dimethyl-4-hydroxyphenyl)-cycloalkane,
Bis-(3,5-dimethyl-4-hydroxyphenyl)-sulfide,
Bis-(3,5-dimethyl-4-hydroxyphenyl)-ether,
Bis-(3,5-dimethyl-4-hydroxyphenyl)-ketone,
Bis-(3,5-dimethyl-4-hydroxyphenyl)-sulfoxide,
α,α'-Bis-(3,5-dimethyl-4-hydroxyphenyl)-diisopropylbenzole sowie deren kernhalogenierte Derivate, insbesondere
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
Bis-(3,5-dimethyl-4-hydroxyphenyl)-sulfon.

Besonders bevorzugte o,o,o',o'-Tetramethylbisphenol-Polycarbonate sind solche, deren Diphenolkomponente allein aus 2,2-Bis-(3,5-dimethyl-4-hydroxyphenyl)-propan besteht; gegebenenfalls können 0,5 bis 20, vorzugsweise 1 bis 7 Gew.-% dieser Verbindung durch 1,1,3,4,6-Pentamethyl-3-(3,5-dimethyl-4-hydroxyphenyl)-indan-5-ol der Formel (1)

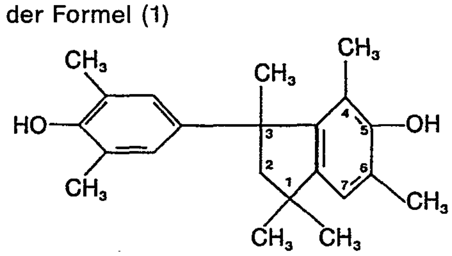

(1)

ersetzt werden.

Die aromatischen Polycarbonate A können durch den Einbau von 0,05 bis 2,0 Mol-% (bezogen auf eingesetzte Diphenole) drei- oder mehr als dreifunktioneller Verbindungen, beispielsweise solcher mit drei oder mehr als drei phenolischen Hydroxygruppen, verzweigt sein.

Die aromatischen Polycarbonate A sollen in der Regel mittlere Molekulargewichte $\bar{M}_w$ von 10 000

bis über 200 000, vorzugsweise von 20 000 bis 80 000 haben, ermittelt durch Messungen der relativen Viskosität in Dichlormethan bei 25 °C und einer Konzentration von 0,5 Gew.-%.

Den hochmolekularen Polycarbonaten mit $\bar{M}_w$ von 10 000 bis 200 000 können auch kleine Anteile niedermolekularer Polycarbonate, z. B. mit einem mittleren Polykondensationsgrad von 2 bis 20, zugemischt sein.

Zur Einstellung des Molekulargewichts $\bar{M}_w$ der Polycarbonate A werden in bekannter Weise Kettenabbrecher, wie beispielsweise Phenol, Halogenphenole oder Alkylphenole, in den berechneten Mengen eingesetzt.

Die aromatischen Polycarbonate A bestehen in der Regel zu 1 bis 100 Gew.-% aus Tetramethylbisphenol-Carbonat-Einheiten, bezogen auf die Summe aller Bisphenol-Carbonat-Einheiten; d. h. Mischungen und Cokondensate werden rechnerisch gleich behandelt, so dass ein Polycarbonat aus je 50 Gew.-% Bisphenol-A-Carbonat- und Tetramethylbisphenol-A-Carbonat-Einheiten wie eine Mischung aus je 50 Gew.-% Bisphenol-A-Polycarbonat und Tetramethylbisphenol-A-Polycarbonat betrachtet wird.

Bei dem weit gesteckten Rahmen des möglichen Tetramethylbisphenol-Polycarbonatanteils am aromatischen Polycarbonat A erscheint es selbstverständlich, dass die Eigenschaften der erfindungsgemässen Mischungen mit dem Gehalt an Tetramethylbisphenol-Polycarbonat variieren: Wird in erster Linie auf hohe Zähigkeit Wert gelegt, so genügt es, wenn 2 bis 20 Gew.-% des aromatischen Polycarbonats A aus Tetramethylbisphenol-Polycarbonat bestehen. Erfindungsgemässe Formmassen, deren aromatische Polycarbonate A zu 80 bis 100 Gew.-% aus Tetramethylbisphenol-Polycarbonat bestehen, zeigen besonders hohe Hydrolyse- und Lösungsmittelbeständigkeit und geringe Spannungsrissneigung. Erfindungsgemässe Formmassen, deren aromatisches Polycarbonat zu über 20 bis unter 80 Gew.-% aus Tetramethylbisphenol-Polycarbonat besteht, besitzen eine Kombination der erwähnten vorteilhaften Eigenschaften.

Für den Fall, dass das aromatische Polycarbonat A ausschliesslich aus Tetramethylbisphenol-Polycarbonat besteht, enthalten die erfindungsgemässen Formmassen zwei Harzkomponenten. Sie bestehen vorzugsweise aus

A. 100 Gew.-Teilen o,o,o',o'-Tetramethylbisphenol-Polycarbonat und

B. 1 bis 30, vorzugsweise 5 bis 20 Gew.-Teilen Polymerisat mit einer Glasübergangstemperatur von unter −20 °C.

Verglichen mit einer erfindungsgemässen Formmasse, die zusätzlich anderes Bisphenol-Polycarbonat enthält (dessen Bisphenoleinheiten in o-Stellung nicht methyliert sind), zeigt die obige 2-Komponentenmischung eine niedrigere Schlagzähigkeit, dafür aber höhere Wärmeformbeständigkeit.

Die Polymerisate B umfassen Pfropfcopolymerisate mit kautschukelastischen Eigenschaften, die im wesentlichen aus mindestens 2 der folgenden Monomeren erhältlich sind: Butadien, Styrol, Acrylnitril und (Meth-)Acrylsäureester mit 1 bis 18 C-Atomen in der Alkoholkomponente; also Polymerisate, wie sie im Prinzip z. B. in «Methoden der Organischen Chemie», (Houben-Weyl), Bd. 14/1, Georg Thieme Verlag, Stuttgart 1961, S. 393–406 und in C. B. Bucknall, «Toughened Plastics», Appl. Science Publishers, London 1977, beschrieben sind. Bevorzugte Polymerisate B besitzen einen Gelgehalt von über 20, vorzugsweise über 40 Gew.-%.

(Meth-)Acrylsäureester sind Ester der Acrylsäure bzw. Methacrylsäure und einwertiger Alkohole mit 1 bis 8 C-Atomen.

Die Acrylatkautschuke (a) der Polymerisate B sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke – wie auf Seite 12 beschrieben – ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$–$C_8$-Alkylester, beispielsweise Methyl-, Ethyl-, Butyl-, Octyl- und 2-Ethylhexylester; Halogenalkylester, vorzugsweise Halogen-$C_1$–$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z. B. Ethylenglykoldimethacrylat, Allylmethacrylat; mehrfach ungesättigte heterocyclische Verbindungen, wie z. B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf < 1 Gew.-% der Pfropfgrundlage (a) zu beschränken.

Bevorzugte «andere» polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$–$C_6$-alkylether. Bevorzugte Acrylatkautschuke als Pfropfgrundlage (a) sind Emulsionspolymerisate, die einen Gelgehalt von $\geq$ 60 Gew.-% aufweisen.

Der Gelgehalt der Pfropfgrundlage (a) wird bei 25 °C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 50, bevorzugt 1 bis 10 Gew.-%, bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate B auf Basis von Polyacrylsäureestern seinen nachfolgend noch einmal zusammengefasst:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d.h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gew.-Verhältnis 90:10 bis 50:50.

Pfropfpolymerisate B der Art (2) werden z.B. in DE-B-2 444 584 (≙ US-A-4 022 748) und in DE-A-2 726 256 (≙ US-A-4 096 202) beschrieben.

Besonders vorteilhafte Pfropfpolymerisate der Art (2) erhält man, wenn man 2 bis 20, vorzugsweise 3 bis 15 Gew.-%, bezogen auf B (2), Monomer (b) auf 80 bis 98, vorzugsweise 85 bis 97 Gew.-%, bezogen auf B (2), des vollständig gebrochenen und in Wasser aufgeschlämmten Latex von (a) in Abwesenheit von Suspendiermittel aufpfropft. Das anfallende pulverförmige Pfropfpolymerisat kann anschliessend getrocknet und im gewünschten Verhältnis unter Einwirkung von Scherkräften mit den anderen Komponenten so homogenisiert werden, dass die mittlere Teilchengrösse $d_{50}$ von B in der erfindungsgemässen Mischung 0,05 bis 3, vorzugsweise 0,1 bis 2, insbesondere 0,2 bis 1 µm beträgt.

Der Begriff «in Abwesenheit von Suspendiermittel» bedeutet die Abwesenheit von Stoffen, die nach Art und Menge die Pfropfmonomeren (b) in der wässrigen Phase suspendieren könnten. Diese Definition schliesst die Anwesenheit von Stoffen nicht aus, die z.B. bei der Herstellung einer gepfropften Pfropfgrundlage (a) suspendierend gewirkt haben; in derartigen Fällen muss das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten: Es muss darauf geachtet werden, dass die Pfropfmonomeren (b) in der wässrigen Phase keine (stabile) Emulsion ergeben.

Ein derart in Abwesenheit von Suspendiermittel hergestelltes Pfropfpolymerisat B ist als Bestandteil der erfindungsgemässen Formmassen in den anderen Harzkomponenten zu einer aussergewöhnlich niedrigen Teilchengrösse verteilbar, die relativ unverändert auch längere Verarbeitungszeiten bei höherer Temperatur übersteht.

Der Begriff «aussergewöhnlich niedrige Teilchengrösse» meint, dass Anzahl, Form und Grösse der einzusetzenden Pfropfpolymerisatteilchen mit Anzahl, Form und Grösse der in die geschmolzene Harzkomponente A eingebrachten Pfropfpolymerisatteilchen auch nach dem Homogenisieren im wesentlichen noch übereinstimmen.

Als Pfropfgrundlage (a) können auch solche Acrylatkautschuke verwendet werden, die als wässrige Emulsion (Latex) anfallen und deren Latexpartikel 1 bis 20 Gew.-%, vorzugsweise 1 bis 10 Gew.-%, bezogen auf (a), bereits in wässriger Emulsion aufgepfropfte Monomere enthalten, deren Homo- bzw. Copolymerisate Glastemperaturen > 0 °C aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z.B. durch Emulsionspolymerisation oder Emulsionspfropfpolymerisation hergestellt. Man kann sie aber auch so herstellen, dass man einen Acrylatkautschuk in Lösung oder Masse herstellt, dann die Pfropfmonomeren aufpfropft und anschliessend diese Kautschuke in eine wässrige Emulsion, die sich für weitere Pfropfverfahren eignet, überführt.

Als Pfropfgrundlagen (a) für Acrylatkautschuke dieser besonderen Ausführungsform eignen sich also vorzugsweise neben den auf Seite 13 aufgezählten Polymerisaten auch in wässriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Die erfindungsgemässen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten Formmassen können bis zu 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

Die Herstellung der Formmassen kann in den üblichen Mischaggregaten, wie Walzen, Knetern, Ein- und Mehrwellenextrudern, erfolgen.

Die in den nachfolgenden Beispielen genannten Teile sind Gewichtsteile; Prozentangaben beziehen sich auf das Gewicht.

Beispiele

Verwendete Komponenten:

I. Polycarbonat aus Bisphenol-A, Phenol und Phosgen, relative Viskosität 1. 285, gemessen in Dichlormethan bei 25 °C in 0,5%iger Lösung.

II. Polycarbonat aus o,o,o',o'-Tetramethylbisphenol-A, Phenol und Phosgen, relative Viskosität 1.29, gemessen in Dichlormethan bei 25 °C in 0,5%iger Lösung.

III. Pfropfpolymerisat mit Kern-Mantel-Struktur der folgenden Zusammensetzung, ausgedrückt in Gewichtsverhältnissen der es bildenden Monomeren: n-Butylacrylat/Butandiol-1,3-diacrylat/Diallylmaleat/Methylmethacrylat = 79,2/0,4/0,4/20;0.

IV. Pfropfpolymerisat aus 80 Teilen vernetztem Polybutylacrylat mit einem Polybutadienkern als Pfropfgrundlage und 20 Teilen Methylmethacrylat als Pfropfauflage.

V. Pfropfpolymerisat aus 90 Teilen vernetztem Polybutylacrylat mit einem Polybutadienkern als Pfropfgrundlage und 7,2 Teilen Styrol und 2,8 Teilen Acrylnitril als Pfropfauflage.

Herstellung der Formmassen:

Auf einem Zweiwellenextruder wurden die Komponenten (in aus der Tabelle zu entnehmendem Verhältnis) unter Stickstoffatmosphäre aufgeschmolzen und homogenisiert. Der Schmelzstrang der erfindungsgemässen Formmassen wurde vor dem Austritt aus der Düse entgast, in Wasser abgekühlt, granuliert und getrocknet.

Aus dem Granulat wurden durch Spritzguss Normkleinstäbe hergestellt und diese nach DIN 53 453 auf Schlagzähigkeit und Kerbschlagzähigkeit geprüft. Ausserdem wurden Platten für die Prüfung der mehraxialen Schlagzähigkeit hergestellt.

Die Prüfung der mehraxialen Schlagzähigkeit erfolgte im EKWA (Elektronische Kraft/Weg-Aufnahme)-Test nach DIN 53 443, Blatt 2; Durchschlagung einer Platte von 3 × 60 × 60 mm mit einem Gewicht von 35 kg mit einem Durchstossdorn mit kugelförmiger Spitze, Durchmesser 20 mm, bei einer Fallhöhe von 1 m.

| Beispiel | I | II | III | IV | V | Kerbschlagzähigkeit [kJ/m²] | Schlagzähigkeit [kJ/m²] |
|---|---|---|---|---|---|---|---|
| | [Gewichtsteile] | | | | | | |
| 1 | – | 90 | – | 10 | – | 7 | n.g. |
| 2 | – | 90 | – | – | 10 | 8 | n.g. |
| 3 | 45 | 45 | 10 | – | – | 12 | n.g. |
| Vergleich | | | | | | | |
| 1 | – | 100 | – | – | – | 2–3 | 20 |
| 2 | 50 | 50 | – | – | – | 3 | n.g. |

«n.g.» bedeutet «nicht gebrochen»

Die Proben der Beispiele 1–3 wiesen ohne Ausnahme eine ausgezeichnete mehraxiale Schlagzähigkeit auf.

**Patentansprüche**

1. Thermoplastische Formmassen aus

A. 100 Gewichtsteilen aromatischem Polycarbonat und

B. 1 bis 30 Gewichtsteilen Pfropfpolymerisat mit einer Glasübergangstemperatur von unter −20 °C,

dadurch gekennzeichnet, dass das aromatische Polycarbonat A mindestens teilweise aus o,o,o',o'-Tetramethylbisphenol-Polycarbonat besteht und das Pfropfpolymerisat B ein Acrylatkautschuk aus

a) 25 bis 98 Gew.-%, bezogen auf (B), Acrylatkautschuk mit einer Glasübergangstemperatur unter −20 °C als Pfropfgrundlage

und

b) 2 bis 75 Gew.-%, bezogen auf (B), mindestens eines polymerisierbaren ethylenisch ungesättigten Monomeren, dessen bzw. deren in Abwesenheit von (1) entstandenen Homo- bzw. Copolymerisate eine Glasübergangstemperatur

über 25 °C hätten, als Pfropfmonomere, ist und zur Herstellung des Pfropfpolymerisats B das Monomere (b) auf den vollständig gebrochenen und in Wasser aufgeschlämmten Latex von (a) in Abwesenheit von Suspendiermittel aufgepfropft worden ist.

2. Formmassen nach Anspruch 1, dadurch gekennzeichnet, dass das Pfropfpolymerisat B zu 85 bis 97 Gew.-% Pfropfgrundlage (a) und 3 bis 15 Gew.-% Pfropfmonomeren (b) hergestellt worden ist.

3. Formmassen aus

A. 100 Gewichtsteilen aromatischem Polycarbonat und

B. 1 bis 30 Gewichtsteilen Pfropfpolymerisat mit einer Glasübergangstemperatur von unter −20 °C,

dadurch gekennzeichnet, dass das aromatische Polycarbonat A mindestens teilweise aus o,o,o',o'-Tetramethylbisphenol-Polycarbonat besteht und das Pfropfpolymerisat B ein Acrylatkautschuk aus

a) 25 bis 98 Gew.-%, bezogen auf (B), Acrylatkautschuk mit einer Glasübergangstemperatur unter −20 °C als Pfropfgrundlage

und

b) 2 bis 75 Gew.-%, bezogen auf (B), mindestens eines polymerisierbaren ethylenisch ungesättigten Monomeren, dessen bzw. deren in Abwesenheit von (1) entstandenen Homo- bzw. Copolymerisate eine Glasübergangstemperatur über 25 °C hätten, als Pfropfmonomere,

ist, der, bezogen auf Pfropfgrundlage (a), 0,1 bis 50 Gew.-% eines vernetzten Dienkautschuks aus einem oder mehreren konjugierten Dienen oder ein Copolymerisat eines konjugierten Diens mit einem ethylenisch ungesättigten Monomer als Kern enthält.

4. Formmassen nach Anspruch 3, dadurch gekennzeichnet, dass das Pfropfpolymerisat B 1 bis 10 Gew.-%, bezogen auf Pfropfgrundlage (a), eines Kerns enthält.

5. Formmassen nach Ansprüchen 1–4, dadurch gekennzeichnet, dass sie glasfaserverstärkt sind.

6. Formmassen nach Ansprüchen 1–5, dadurch gekennzeichnet, dass das aromatische Polycarbonat A mindestens teilweise aus 2,2-Bis-(3,5-dimethyl-4-hydroxyphenyl)-propan-Polycarbonat besteht.

7. Formmassen nach Ansprüchen 1–6, dadurch gekennzeichnet, dass das aromatische Polycarbonat A eine Mischung aus Bisphenol-A- und o,o,o',o'-Tetramethylbisphenol-A-Polycarbonat ist.

**Claims**

1. Thermoplastic moulding compositions of

A. 100 parts by weight of an aromatic polycarbonate and

B. 1 to 30 parts by weight of a graft polymer with a glass transition temperature of below −20 °C, characterised in that the aromatic polycarbonate A consists at least partly of o,o,o',o'-tetramethyl bisphenol polycarbonate and the graft polymer B is an acrylate rubber of

a) 25 to 98% by weight, based on (B), of an acrylate rubber with a glass transition temperature of below −20 °C as the graft substrate and

b) 2 to 75% by weight, based on (B), of at least one polymerisable ethylenically unsaturated monomer of which the homo- or copolymers formed in the absence of (1) would have a glass transition temperature of higher than 25 °C, as the graft monomer, and for the production of the graft polymer B the monomer (b) has been grafted on to the completely broken latex, suspended in water, of (a), in the absence of suspending agent.

2. Moulding compositions according to Claim 1, characterised in that the graft polymer B has been produced from 85 to 97% by weight of graft substrate (a) and 3 to 15% by weight of graft monomers (b).

3. Moulding compositions of

A. 100 parts by weight of an aromatic polycarbonate and

B. 1 to 30 parts by weight of a graft polymer with a glass transition temperature of below −20 °C, characterised in that the aromatic polycarbonate A consists at least partly of o.o.o'.o'-tetramethyl bisphenol polycarbonate and the graft polymer B is an acrylate rubber of

a) 25 to 98% by weight, based on (B), of an acrylate rubber with a glass transition temperature of below −20 °C, as the graft substrate and

b) 2 to 75% by weight, based on (B), of at least one polymerisable, ethylenically unsaturated monomer of which the homo- or copolymers formed in the absence of (1) would have a glass transition temperature of higher than 25 °C, as the graft monomer which contains, based on the graft substrate (a), 0.1 to 50% by weight of a crosslinked diene rubber of one or more conjugated dienes or a copolymer of a conjugated diene with an ethylenically unsaturated monomer as the core.

4. Moulding compositions according to Claim 3, characterised in that the graft polymer B contains 1 to 10% by weight, based on the graft substrate (a), of a core.

5. Moulding compositions according to Claims 1–4, characterised in that they are glass-fibre-reinforced.

6. Moulding compositions according to Claims 1–5, characterised in that the aromatic polycarbonate A consists at least partly of 2,2-bis-(3,5-dimethyl-4-hydroxyphenyl)-propane polycarbonate.

7. Moulding compositions according to Claims 1–6, characterised in that the aromatic polycarbonate A is a mixture of bisphenol-A- and o,o,o',o'-tetramethyl bisphenol-A-polycarbonate.

**Revendications**

1. Matières à mouler thermoplastiques consistant en:

A. 100 parties en poids d'un polycarbonate aromatique, et

B. 1 à 30 parties en poids d'un polymère greffé présentant une température de transition du second ordre inférieure à −20 °C,

caractérisées en ce que le polycarbonate aromatique A consiste en partie au moins en un polycarbonate d'o,o,o',o'-tétraméthyl-bisphénol et le polymère greffé B est un caoutchouc d'acrylate obtenu à partir de:

a) 25 à 98% en poids, par rapport à B, d'un caoutchouc d'acrylate présentant une température de transition du second ordre inférieure à −20 °C, en tant que support de greffage, et

b) 2 à 75% en poids, par rapport à B, d'au moins un monomère à insaturation éthylénique polymérisable dont les homo- ou co-polymères obtenus en l'absence de (1) auraient une température de transition du second ordre supérieure à 25 °C, en tant que monomères greffés, et en ce que, pour la préparation du polymère greffé B, on a greffé le monomère b) sur le latex de a) totalement rompu et dispersé dans l'eau, en l'absence d'agents de suspension.

2. Matières à mouler selon la revendication 1, caractérisées en ce que le polymère greffé B a été préparé à partir de 85 à 97% en poids du support de greffage a) et de 3 à 15% en poids des monomères greffés b).

3. Matières à mouler consistant en:

A. 100 parties en poids d'un polycarbonate aromatique, et

B. 1 à 30 parties en poids d'un polymère greffé présentant une température de transition du second ordre inférieure à −20 °C,

caractérisées en ce que le polycarbonate aromatique A consiste en partie au moins en un polycarbonate d'o,o,o',o'-tétraméthyl-bisphénol, et en ce que le polymère greffé B est un caoutchouc d'acrylate obtenu à partir de, par rapport au support de greffage a), 0,1 à 50% en poids d'un caoutchouc diénique réticulé obtenu à partir d'un ou plusieurs diènes conjugués ou d'un copolymère d'un diène conjugué et d'un monomère à insaturation éthylénique en tant que noyau.

4. Matières à mouler selon la revendication 3, caractérisées en ce que le polymère greffé B contient, par rapport au support de greffage a), de 1 à 10% en poids d'un noyau.

5. Matières à mouler selon les revendications 1 à 4, caractérisées en ce qu'elles sont renforcées par des fibres de verre.

6. Matières à mouler selon les revendications 1 à 5, caractérisées en ce que le polycarbonate aromatique A consiste en partie au moins en polycarbonate du 2,2-bis-(3,5-diméthyl-4-hydroxyphényl)-propane.

7. Matières à mouler selon les revendications 1 à 6, caractérisées en ce que le polycarbonate aromatique A est un mélange de polycarbonate du bisphénol A et de polycarbonate d'o,o,o',o'-tétraméthyl-bis-phénol A et en ce que le polymère greffé B est un caoutchouc d'acrylate consistant en:

a) 25 à 98% en poids, par rapport à B, d'un caoutchouc d'acrylate ayant une température de transition du second ordre inférieure à −20 °C, en tant que support de greffage, et

b) 2 à 75% en poids, par rapport à B, d'au moins un monomère à insaturation éthylénique polymérisable dont le ou les homo- ou co-polymères formés en l'absence de (1) auraient un température de transition du second ordre supérieure à 25 °C, en tant que monomères greffés.